(19) Europäisches Patentamt
European Patent Office
Office européen des brevets

(11) Veröffentlichungsnummer: **0 052 748**
**A1**

(12) # EUROPÄISCHE PATENTANMELDUNG

(21) Anmeldenummer: **81108409.4**

(22) Anmeldetag: **16.10.81**

(51) Int. Cl.³: **C 09 B 49/12**
D 06 P 1/30

(30) Priorität: **21.11.80 DE 3043863**

(43) Veröffentlichungstag der Anmeldung:
**02.06.82 Patentblatt 82/22**

(84) Benannte Vertragsstaaten:
**DE FR GB IT**

(71) Anmelder: **CASSELLA Aktiengesellschaft**
**Hanauer Landstrasse 526**
**D-6000 Frankfurt am Main 61(DE)**

(72) Erfinder: **Nagl, Gert, Dr.**
**Ulmenweg 6**
**D-6369 Niederdorfelden(DE)**

(72) Erfinder: **Kindler, Horst, Dr.**
**Birsteinerstrasse 14**
**D-6000 Frankfurt am Main 61(DE)**

(74) Vertreter: **Urbach, Hans-Georg, Dr. et al,**
**Hanauer Landstrasse 526**
**D-6000 Frankfurt am Main 61(DE)**

(54) **Neue Schwefelfarbstoffe, ihre Herstellung und Verwendung.**

(57) Neue Schwefelfarbstoffe, die durch Schwefelung von Verbindungen der allgemeinen Formel I

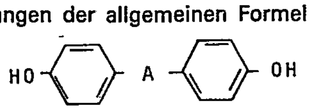 (1)

worin A ein Brückenglied der Formel

$-N{=}CH-CH{=}N-$ oder $-NH-CH_2-CO-NH-$

bedeutet, nach den an sich bekannten Verfahren des Back- oder Kochverfahrens erhalten werden. Sie eignen sich zum Färben von Baumwolle in lebhaften, gelboliven Tönen von guten Echtheiten und hoher Farbstärke.

EP 0 052 748 A1

0052748
Ref. 3201
Dr. Va/lro

## Neue Schwefelfarbstoffe, ihre Herstellung und Verwendung

Die vorliegende Erfindung betrifft neue, wertvolle Schwefelfarbstoffe, die durch Schwefelung von Verbindungen der allgemeinen Formel I

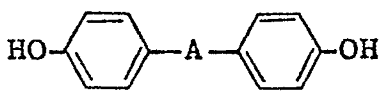

(I)

worin A ein Brückenglied der Formel

$-N=CH-CH=N-$ oder $-NH-CH_2-CO-NH-$
bedeutet, nach den an sich bekannten Verfahren des Back- oder Kochverfahrens erhalten werden. Sie eignen sich hervorragend zum Färben von Baumwolle in lebhaften, gelboliven Tönen von ausgezeichneten Echtheiten und hoher Farbstärke.

Bekannt sind die Schwefelfarbstoffe CI Sulfur Green 11 und 1, Nr. 53 165 und 53 166, die durch Schwefelung von p-Aminophenol, p-Nitrosophenol oder p-Nitrophenol hergestellt werden, Diese Farbstoffe färben die Zellulose in grünstichig grauen Farbtönen, die wesentlich stumpfer und blauer sind als die Farbtöne der erfindungsgemäßen Farbstoffe.

Die Anwendungsmöglichkeiten derartig stumpfer Farbstoffe als Alleinfarbstoff sind relativ beschränkt. Auch als Hauptkomponente in Farbstoffkombinationen sind solche Farbstoffe nicht einsetzbar, da jeder weitere Farbstoffzusatz die Vergrauung nur noch verstärkt. Lediglich zum Abtrüben anderer klarer Farbstoffe können sie in kleineren Mengen dann eingesetzt werden, wenn eine Nuancenverschiebung nach blau erwünscht ist oder toleriert wird.

Insgesamt ist somit festzustellen, daß die bekannten Farbstoffe allein aufgrund ihres Farbtons erheblichen Einsatzbeschränkungen unterworfen sind, denen die erfindungsgemäßen Farbstoffe wegen ihres reinen Farbtons nicht unterliegen.

Es ist allerdings möglich, Zellulose mit einer geeigneten Kombination bekannter Schwefelfarbstoffe so zu färben, daß

der Farbton bzw. das Remissionspektrum dem der erfindungsgemäßen Farbstoffe entspricht.

Eine geeignete Kombination bekannter Schwefelfarbstoffe besteht z.B. aus Color Index Sulfur Green 2 und Color Index Sulfur Brown 46.

Ein Nachteil dieser Kombination besteht darin, daß man auf Farbstoffe zurückgreifen muß, die nach verschiedenen und technisch sehr umständlichen Verfahren hergestellt werden müssen.

Ein weiterer Nachteil dieser Kombination besteht in ihrer relativ geringen Ergiebigkeit, die die Kosten der Färbungen bestimmt .. Ein weiterer Nachteil besteht darin, daß sich die Kombinationen aus chemisch sehr verschiedenen Farbstoffen zusammensetzen, die aus dem Färbebad mit unterschiedlichen Geschwindigkeiten auf die Faser aufziehen,unterschiedliches Egalisierverhalten aufweisen und daher bekanntermaßen in der Praxis zu schwankenden Färberesultaten und einem unruhigen Warenbild führen. Ein weiterer Nachteil dieser Kombinationen besteht darin, daß man auf Backfarbstoffe zurückgreifen muß, deren Qualität bekanntermaßen von Partie zu Partie relativ großen Schwankungen unterworfen ist.

Auch die Echtheiten dieser Kombinationen lassen noch zu wünschen übrig, insbesondere im Bereich der Waschechtheiten nach DIN 54010, 54011 und 54015,der Säureechtheit nach DIN 54028 und der Lichtechtheit.

Es wurde nun gefunden, daß man wertvolle neue Schwefelfarbstoffe erhält,die diese Nachteile nicht haben und sich hinsichtlich der genannten Echtheiten wesentlich besser verhalten, wenn man Verbindungen der allgemeinen Formel I

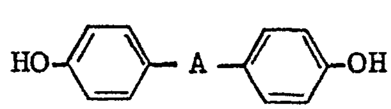

worin A ein Brückenglied der Formel -N=CH-CH=N- oder $-NH-CH_2-CO-NH$ bedeutet, nach den an sich bekannten Verfahren des Back- oder Kochverfahrens schwefelt.

Unter die allgemeine Formel I fallen die Verbindungen Ia und Ib.

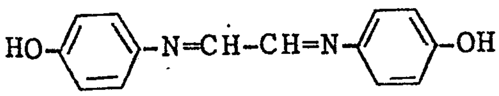

(Ia)

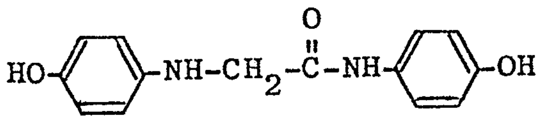

(Ib)

Beide Verbindungen sind bekannt, leicht zugänglich und in ihrer Struktur eng verwandt. Das ihnen gemeinsame Strukturprinzip ist die Verknüpfung zweier Moleküle p-Aminophenol mit einer $C_2$-Kette an den Aminogruppen. Sie unterscheiden sich nur hinsichtlich der Hydrierungs- bzw. Oxydationsstufe. Da bei den Schwefelungsreaktionen bekanntermaßen Hydrierungs- bzw. Reduktions- und Oxydationsvorgänge ablaufen, ist es einzusehen, daß bei der Schwefelung der Verbindungen Ia und Ib sehr ähnliche Farbstoffe erhalten werden.

Die erfindungsgemäßen Farbstoffe unterscheiden sich von den bekannten Schwefelfarbstoffen C.I. Sulfur Green 1 und 11, die durch Schwefelung von p-Aminophenol hergestellt werden können, schon rein äußerlich durch die Farbe der konzentrierten wässrigen Lösungen der Leukofarbstoffe. Die Sulfidküpen der Schwefelfarbstoffe aus p-Aminophenol sind schmutzig grün, die Sulfidküpen der erfindungsgemäßen Schwefelfarbstoffe sind rot bis braun gefärbt. Dieser Farbunterschied zeigt sich auch sehr deutlich auf frisch gefärbtem Material vor der Nachbehandlung mit Oxydationsmitteln.

Die Herstellung der erfindungsgemäßen Farbstoffe erfolgt vorzugsweise durch Schwefelung einer der Verbindungen der Formeln Ia oder Ib.

Es ist jedoch auch möglich, eine Mischung dieser Verbindungen einzusetzen.

Besonders bevorzugt ist die Schwefelung der Verbindung Ia, die besonders leicht zugänglich ist. Sie wird z.B. erhalten, wenn man eine wässrige Anschlämmung von p-Aminophenol mit der stöchiometrischen Menge einer wässrigen Glyoxallösung bei

Temperaturen von 0 bis 100°C umsetzt. Man erhält hierbei eine wässrige Anschlämmung der Verbindung I, die für die Schwefelung in dieser Form direkt eingesetzt werden kann.

Die Schwefelung erfolgt in an sich bekannter Weise nach dem Backverfahren oder, vorzugsweise, nach dem Koch-(Rückfluß-)verfahren.

Das Schwefeln in der Kochschmelze erfolgt in der an sich bekannten Weise durch Reaktion mit Alkalipolysulfid in wässrigem Medium oder einem organischen Lösungsmittel bei erhöhter Temperatur, wie es z.B. bei O. Lange, "Die Schwefelfarbstoffe, ihre Herstellung und Verwendung" (1919), S. 208 - 220 sowie 223 - 225, oder in "Venkataraman, The Chemistry of Synthetic Dyes, Band 2 (1952), Seite 1062 ff. und Seite 1103 ff., sowie Band 7 (1974), Seite 24 ff. Academic Press, New York, San Francisco, London" beschrieben ist.

Besonders geeignet sind Kochschmelzen, die unter Verwendung von Alkalipolysulfid arbeiten, wobei pro Mol des zu schwefelnden Produkts 0,1 bis 10 Mole, vorzugsweise 0,5 bis 5 Mole Natriumsulfid und 1 bis 30 Mole, vorzugsweise 4 bis 20 Mole Schwefel eingesetzt werden. Die Schwefelung der Verbindungen der Formel I kann unter Ausschluß von Wasser oder in rein wässrigem Medium erfolgen, wird aber normalerweise in wasserhaltigen Lösungsmitteln mit einem Wassergehalt von 5 bis 70 % durchgeführt. Im Falle der mit Wasser mischbaren Lösungsmittel arbeitet man vorzugsweise unter Zusatz der üblichen hydrotropen Verbindungen, z.B. des Natriumsalzes der Xylolsulfonsäure. Als Lösungsmittel, in denen zweckmäßigerweise gearbeitet werden kann, sind Alkanole oder Cycloalkanole mit 1 bis 7 C-Atomen, wie z.B. Methanol, Ethanol, Propanol, Isopropanol, n-Butanol, Isobutanol, Amylalkohol, Cyclohexanol, Methylcyclohexanol und Monoalkyläther, insbesondere Monoalkyläther von Ethylenglykol und Diethylenglykol wie z.B. Ethylenglykolmonomethyläther, -mono-ethyläther, -monopropyläther, Diethylenglykol-mono-methyläther, mono-ethyläther und mono-propyläther geeignet.

Die Kochschmelze erfolgt bei Temperaturen von 80 bis 200°C, vorzugsweise 110 bis 180°C, insbesondere im Bereich von 115 bis 130°C und zweckmäßigerweise bei einer Reaktionsdauer von 1 bis 100, vorzugsweise von 10 bis 80 Stunden.

Unter Inkaufnahme der bekannten Nachteile der sogenannten "Backschmelzen" oder "Schwefelschmelzen" (vergl. O. Lange, "Die Schwefelfarbstoffe" (1912) Seite 221 und 222) können die Verbindungen der Formel I auch nach diesem Verfahren zu Schwefelfarbstoffen geschwefelt werden.

Bei der Herstellung der erfindungsgemäßen Schwefelfarbstoffe durch Backschmelze werden diese mit der 7 bis 30-fachen Molmenge Schwefel und der 2 bis 6-fachen Molmenge Natriumsulfid 1 bis 20 Stunden auf 200 bis 300°C erhitzt. Auch hierbei kann zunächst im Lösungsmittel, vorzugsweise in Wasser gearbeitet werden, um eine gute Homogenität des Reaktionsansatzes zu gewährleisten. Das Lösungsmittel wird dann abgedämpft und die lösungsmittelfreie Schmelze zweckmäßigerweise in Schutzgasatmosphäre auf die gewünschte Temperatur erwärmt.

Die nach dem erfindungsgemäßen Verfahren hergestellten Schwefelfarbstoffe können auf übliche Weise isoliert und danach in die verschiedenen Handelsformen gebracht werden. Wurde die Schwefelung in einem mit Wasser mischbaren Lösungsmittel in Gegenwart von hydrotropen Verbindungen ausgeführt, so kann die Schmelze auch ohne Isolierung des Farbstoffs direkt zu flüssigen gebrauchsfertigen Farbstoffen weiterverarbeitet werden.

Die erfindungsgemäß herstellbaren Schwefelfarbstoffe lassen sich durch Reduktionsmittel, wie sie zur Reduktion von Schwefelfarbstoff üblich sind, sehr gut reduzieren und ergeben so klare wässrige Lösungen. Sie können zum Färben von vorzugsweise pflanzlichen Fasern nach den üblichen für das Färben mit Schwefel- oder Schwefelküpenfarbstoffen bekannten Verfahren eingesetzt werden.

Hierzu werden sie mit Reduktionsmitteln, vorzugsweise Natriumdithionit, Natriumsulfid oder Natriumhydrogensulfid, möglicherweise aber auch mit Natriumformaldehyd-sulfoxylat, Glukose oder organischen Mercaptoverbindungen, wie z.B. Thioglycerin oder Thioglycolsäure, in die lösliche Leukoform überführt, die auf die Fasern aufzieht. Die in flüssiger gebrauchsfertiger Form vorliegenden Farbstoffe enthalten die lösliche Leukoform und Reduktionsmittel und können auch ohne weiteren Zusatz von Reduktionsmitteln zum Färben der genannten Fasern verwendet werden.

Nach dem Aufziehen der Farbstoffe auf die Fasern wird die Leukoform der erfindungsgemäßen Schwefelfarbstoffe in üblicher Weise, beispielsweise durch "Verhängen" der Färbungen an der Luft oder Oxidation mit Oxidationsmitteln, wie beispielsweise Wasserstoffperoxid, Alkalibichromat, Alkalichlorit oder Alkalijodat wieder in die unlösliche Form des Schwefelfarbstoffs überführt.

Die erfindungsgemäßen Farbstoffe liefern im Vergleich zu den Schwefelfarbstoffen aus p-Aminophenol wesentlich klarere, gelbere, lebhaftere Farbtöne und zeichnen sich insbesondere durch eine hohe Farbstärke und Ergiebigkeit aus und bieten deshalb außergewöhnliche wirtschaftliche Vorteile. Die Färbungen zeigen hohe Echtheiten wie Licht- und Reibechtheit und insbesondere gute Naßechtheiten wie z.B. Waschechtheiten nach DIN 54010, 54011, Peroxid-Waschechtheit nach DIN 54 015 und Schweißechtheit sowie gute Säureechtheit nach DIN 54 028 und gute Mercerisierechtheit.

Ein weiterer Vorteil der erfindungsgemäßen Farbstoffe ist ihre Stabilität gegen die Einwirkung von Alkalidithionit und Alkali-Formaldehyd-Sulfoxylat.

Ein weiterer Vorteil der erfindungsgemäßen Farbstoffe ist die gute Farbtonkonstanz bei verschiedenen Oxydationsverfahren und-bedingungen wodurch eine gute Reproduzierbarkeit der Färbungen und höhere Betriebssicherheit gewährleistet ist.

Beispiel 1 :

12 Teile der Verbindung Ia werden in eine Polysulfidlösung von etwa 80°C eingebracht, die aus 10 Teilen Wasser, 25 Teilen Diethylenglykolmonoethylether, 3 Teilen des Natriumsalzes von m-Xylolsulfonsäure, 16 Teilen 60 %igem Natriumsulfid und 22 Teilen Schwefel bereitet wurde. Man erhitzt zum Sieden und dampft die Schmelze bis zu einer Siedetemperatur von 125°C ein. Man hält die Schmelze bei dieser Temperatur 24 Stunden unter kräftigem Rühren und Sieden am Rückfluß. Die Schmelzmasse wird darauf durch Zugabe von 15 Teilen 60 %igem Natriumsulfid und 100 Teilen Wasser in Lösung gebracht. Man erhält eine homogene, nicht absetzende, haltbare Lösung des reduzierten Schwefelfarbstoffes, die mit Wasser ohne Ausfällung mischbar ist. Beim Färben mit dieser gebrauchsfertigen Farbstoff-lösung erhält man ohne weiteren Zusatz von Reduktionsmitteln auf der Zellulosefaser volle gelbolive Färbungen mit guten bis sehr guten Echtheitseigenschaften.

Beispiel 2

Aus 16 Teilen p-Aminophenol in 30 Teilen Wasser und 11 Teilen einer 40 %igen wässrigen Glyoxallösung stellt man durch Rühren bei 40°C eine Anschlämmung der Verbindung Ia in Wasser her. Diese Anschlämmung tropft man gleichmäßig während ca. 6 Stunden zu einer kräftig gerührten und siedenden Polysulfidlösung, die aus 25 Teilen Wasser, 25 Teilen Diethylenglykolmonoethylether, 9 Teilen des Natriumsalzes von m-Xylolsulfonsäure, 24 Teilen 60 %igem Natriumsulfid und 33 Teilen Schwefel bereitet wurde. Während des Zutropfens wird die Siedetemperatur durch ständiges Eindampfen bei 115 - 118°C gehalten. Nach dem Zutropfen dampft man die Schmelze bis zu einer Siedetemperatur von 120° C ein und hält sie bei dieser Temperatur 24 Stunden unter kräftigem Rühren und Sieden am Rückfluß. Die Schmelzmasse wird darauf durch Zugabe von 25 Teilen 60 %igem Natriumsulfid und 120 Teilen Wasser in Lösung gebracht. Man erhält eine homogene, nicht absetzende, haltbare Lösung des reduzierten Schwefelfarbstoffes, die mit Wasser ohne Ausfällung mischbar ist. Die Färbung auf Zellulose ist

deutlich gelber als im Beispiel 1 bei gleichen Echtheitseigenschaften.

Beispiel 3

13 Teile der Verbindung Ib werden in eine Polysulfidlösung von etwa 80°C eingebracht, die aus 17 Teilen Wasser, 17 Teilen Diethylenglykolmonoethylether, 6 Teilen des Natriumsalzes von m-Xylolsulfonsäure, 16 Teilen 60 %igem Natriumsulfid und 22 Teilen Schwefel bereitet wurde. Man erhitzt zum Sieden und dampft die Schmelze bis zu einer Siedetemperatur von 125°C ein und hält sie bei dieser Temperatur 48 Stunden unter kräftigem Rühren und Sieden am Rückfluß. Die Schmelzmasse wird darauf durch Zugabe von 15 Teilen 60 %igem Natriumsulfid und 100 Teilen Wasser in Lösung gebracht. Man erhält eine homogene, nicht absetzende, haltbare Lösung des reduzierten Schwefelfarbstoffes, die mit Wasser ohne Ausfällung mischbar ist. Beim Färben mit dieser gebrauchsfertigen Farbstofflösung erhält man ohne weiteren Zusatz von Reduktionsmitteln auf der Zellulosefaser volle gelbolive Färbungen mit guten Echtheitseigenschaften.

Die oben eingesetzte Verbindung Ib wurde hergestellt nach den Angaben von O. Hinsberg in Ber. deutsch. Chem. Ges. Bd. 41 (1908) Seite 1369-1370 durch Umsetzung von Glyoxal-Natriumhydrogensulfit-Addukt mit p-Aminophenol im Molverhältnis 1 : 1.

P a t e n t a n s p r ü c h e

1. Neue Schwefelfarbstoffe, herstellbar durch Schwefeln von Verbindungen der allgemeinen Formel I

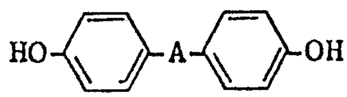 ,

worin A ein Brückenglied der Formel
$-N=CH-CH=N-$ oder $-NH-CH_2-CO-NH-$ bedeutet, nach an sich bekannten Schwefelungsverfahren.

2. Schwefelfarbstoffe gemäß Anspruch 1, wobei die Verbindungen der allgemeinen Formel I nach dem an sich bekannten Koch-(Rückfluß-)-Verfahren geschwefelt werden.

3. Verfahren zur Herstellung von Schwefelfarbstoffen durch Umsetzung von Ausgangsmaterialien mit Schwefel und Alkalisulfid oder Alkalipolysulfid nach dem Verfahren der Kochschmelze oder der Backschmelze, dadurch gekennzeichnet, daß als Ausgangsmaterial Verbindungen der allgemeinen Formel I

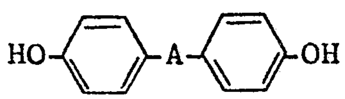 ,

worin A ein Brückenglied der Formel
$-N=CH-CH=N-$ oder $-NH-CH_2-CO-NH-$ bedeutet, eingesetzt werden.

4. Verfahren gemäß Anspruch 3, dadurch gekennzeichnet, daß nach dem Kochverfahren geschwefelt wird.

5. Verwendung der Schwefelfarbstoffe der Ansprüche 1 und 2 zum Colorieren von Textilmaterialien aus oder enthaltend Zellulosefasern.

0052748

Europäisches Patentamt

# EUROPÄISCHER RECHERCHENBERICHT

Nummer der Anmeldung

EP 81 10 8409

## EINSCHLÄGIGE DOKUMENTE

| Kategorie | Kennzeichnung des Dokuments mit Angabe, soweit erforderlich, der maßgeblichen Teile | betrifft Anspruch |
| --- | --- | --- |
| A | DE - C - 125 136 (BASF)<br>* Patentansprüche; Beispiel * | 1 |
| | -- | |
| A | DE - C - 232 713 (BAYER)<br>* Patentansprüche * | 1 |
| | ---- | |

KLASSIFIKATION DER ANMELDUNG (Int. Cl.³)

C 09 B 49/12
D 06 P 1/30

RECHERCHIERTE SACHGEBIETE (Int. Cl.³)

C 09 B 49/00

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
| --- | --- | --- |
| Den Haag | 02-03-1982 | DELANGHE |